# EUROPEAN PATENT SPECIFICATION

(11) **EP 1 787 377 B1**
(45) Date of publication and mention of the grant of the patent: **14.12.2011**
(21) Application number: 05757996.3
(22) Date of filing: 14.07.2005
(51) Int. Cl.: H02J 13/00, H02J 3/14

(54) **SYSTEM CONSISTING OF A NUMBER OF MODULES FOR MONITORING AND CONTROLLING AN ELECTRICAL INSTALLATION**
SYSTEM AUS MEHREREN MODULEN ZUR ÜBERWACHUNG UND STEUERUNG EINER ELEKTRISCHEN INSTALLATION
SYSTEME CONSTITUE D'UN CERTAIN NOMBRE DE MODULES DE SURVEILLANCE ET DE CONTROLE D'UNE INSTALLATION ELECTRIQUE

(30) Priority: 16.07.2004 DK 200401123
(43) Date of publication of application: 23.05.2007
(73) Proprietor: Conson Elektronik A/S, 6950 Ringkobing (DK)
(72) Inventor: ANDRESEN, Harald, DK-6950 Ringkøbing (DK)
(74) Representative: Schmidt, Jens Joergen
(86) International application number: PCT/DK2005/000495
(87) International publication number: WO 2006/007845

(56) References cited:
- DE-A1- 10 016 857
- US-A- 3 789 236
- US-A- 4 135 101

## Description

### Field of the invention

The present invention relates to a system for monitoring and controlling an electrical installation. The invention will be explained in particular in connection with monitoring and controlling electrical installations in a private household, but may also be applied in connection with electrical installations used in e.g. an old people's home, an office environment, or electrical installations for industrial use.

### Background of the Invention

Devices for monitoring and controlling electrical installations exist today.

Some of the best-known devices for monitoring and controlling an electrical installation include a ground fault circuit interrupter, also known as a GFC Interrupter which interrupts the power supply to a main electrical distribution board by detecting a fault current. The main electrical distribution board also contains a number of fuses to protect against overloading and short circuits. The ground fault circuit interrupter and the fuses are devices which may be used both to perform simple monitoring of the electrical installation and to control the electrical installation. The control may consist of interrupting the power of the entire electrical installation of the GFC interrupter, or the control may consist of interrupting the power to a part of the electrical installation of the fuses.

Some of the simplest devices for exclusively controlling part of an electrical installation may consist of a motion and light level sensor connected to a relay designed to disconnect or connect power. Such a device for controlling part of an electrical installation may for instance be used for switching on or off outdoor lighting such as e.g. a lamp. The device is e.g. adjusted to switch on the lamp and keep it switched on for a given time interval after detection of a motion when the level of light is below a given level.

Some of the purposes of the existing devices for monitoring and controlling electrical installations include protecting the users from electric shock or securing against fire caused by the electrical installation; or in the example with control of the outdoor lamp, to save power.

WO 01/73912 describes an apparatus and a method for early detection of disturbances such as arcing faults in an electrical installation. It is described that most arcing faults are not detected by a GFC interrupter or by fuses. The application describes that the detection of arcing faults takes place by monitoring the existence of RF (radio frequency) transients in an electrical signal. The existence of RF transients is determined by means of a detector. Each detector consists of at least two sensors. The transients that derive from ordinary dampers and from normal use of switches are sorted out through processing of the transients. A relative value for the transients which are considered to be abnormal is summed up, and when this value reaches a predetermined level, an alarm is activated and/or the power is interrupted. It is described that the detectors may be located in a central electrical distribution board.

One of the disadvantages of this monitoring system is that it is rather complex. Among other things, the complexity is due to the fact that each detector consists of at least two sensors. Furthermore, it is necessary to determine very precise reference values for the RF transients so that no other RF signals activate the alarm or the disconnection of the electrical installation.

US 6,509,658 is an American patent which describes a system for automatic interruption of the connection to an electrical appliance which is located in a place in which there is no light at a given time. Among other things, this takes place by means of two relays and a light sensor. The purpose is to automatically disconnect electrical appliances during nighttime when appliances are also consuming power, e.g. for stand-by mode, and to only have the electrical appliances switched on during daytime.

US 3,789,236 discloses a device for monitoring power delivered by a source of energy and for disconnecting and or reconnecting selected devices in response to the level of energy provided.

This system for reduction of power consumption has the disadvantage that the power to an appliance is only interrupted when no light is registered. Despite the fact that it is described that the appliances which are disconnected are in stand-by mode, it is not described how it may be determined whether a particular appliance is in stand-by mode. It is merely described that "the power switching controller" connects or disconnects the connection to an electrical appliance depending on the presence of light.

### Summary of the invention

One of the purposes of the present invention is to provide a system for monitoring and controlling an electrical installation, and a system which eliminates the drawbacks of the prior art.

Another purpose of the invention is to provide a reliable system which is capable of optimizing the power consumption of a given electrical installation, but where the optimization does not only take place based on considerations regarding economy or security, but also takes place based on considerations regarding operation and control, and in this manner provides advantages both for a consumer and a power supplier.

These purposes are obtained in a first aspect of the invention through a system for monitoring and controlling at least one power conductor, where the system is designed for use in connection with an electrical installation with at least one power conductor for distribution of power to at least one output designed for connecting one or more electrical appliances, and where the system includes
- a detector which is operationally located with respect to one power conductor connecting only one or very few outputs to other parts of the electrical installation, and where the detector is capable of detecting a magnetic field around the conductor, and where the detector is adapted to give an electric output signal as a response to a detected magnetic field of the power conductor,
- a regulator which for regulating the power of the power conductor, and where the regulator is adapted to at least respectively interrupt and connect the power of the power conductor as a response to a control signal from a control
- a control for processing the output signal from the detector and for controlling the regulator as a response to the output signal from the detector, and possibly also as a response to an external control signal
- a memory designed for containing reference values for at least one predefined instant power consumption and for at least one predefined accumulated power consumption as a function of time, and a connection means for transmitting and receiving signals from and to the control, and
- said system being adapted in such a manner that, based on the detected magnetic field, an indication of both an instant and an accumulated power consumption is achieved as a function of time, to be compared to the predefined instant power consumption and the predefined accumulated power consumption.

In principle, the detector may be any kind of magnetic field sensitive component. It may for example be a magnetoresistive resistance or a pick-up from a coil. These components are used together with matching amplifier and filter circuits and matching software. In the preferred embodiments, which are described in detail in this application, a Hall sensor is used as detector.

The system is e.g. also able to detect and process the instant power consumption that may change with a frequency in a radiofrequency frequency range. The change of instant power consumption with such frequency of change may be due to electrical disturbances such as e.g. arcing faults.

The regulator may be an on/off relay and/or a triac control and/or a control by means of transistors. Triac and transistor control can switch a power conductor on/off, but may also be used for damping.

In a preferred embodiment, one detector is located for one conductor so that the control may take place at a level down to one single output connected to one single electrical appliance. Accordingly, one detector and one regulator are in a preferred embodiment provided for each conductor. A possible advantage by providing one detector and one regulator for each conductor is that hereby exclusively a particular part of the electrical installation connected to that particular power conductor may be regulated. The reason for the regulation or e.g. a shutdown of the conductor may be an electrical disturbance or undesired stand-by power consumption. A first alternative to this is to place more detectors operationally with respect to a conductor. A second alternative is to place a detector operationally with respect to several conductors.

Through simple means, monitoring of instant and accumulated power consumption is thus combined. A possible advantage by combining monitoring of instant and accumulated power consumption and using the same means for e.g. detecting the power consumption is that a simple, cost-efficient and commercially interesting solution is provided which is suited for installation in a central distribution board of e.g. a household. The accumulated power consumption may indicate undesirable stand-by power consumption or undesirable overconsumption of power. The instant power consumption may indicate an electrical disturbance such as an arcing fault which e.g. shows in the power consumption as a transient. Such transients normally show as a quite rapid change in the instant power consumption. The frequencies of the instant power consumption changes due to electrical disturbances are normally in the radio frequency range. Therefore the system is adapted e.g. to detect with a time-resolution in the radio frequency range.

Since the power consumption is registered, by means of which the energy consumption is also registered, it is also possible to give a signal regarding the operating duration of a connected appliance so that it is e.g. possible to change a light source or lamp before it stops working. The system may also transmit a signal when e.g. at least one light source or lamp has stopped working. This may be the case when it is registered that consumption is e.g. 60 W less than normal. This provides increased user-friendliness, e.g. in a restaurant, in a hotel or in high-ceilinged places and/or places that are difficult to access, and where it is thus expensive to change light sources often.

Finally, it is also possible to configure and/or monitor and/or control the system from an external unit.

According to an embodiment of the invention, at least two of the elements comprised by the system are located in one monitoring module for monitoring and controlling at least one power conductor, one or more detectors, one or more regulators, the control, the memory as well as the connection means.

It may be preferred that each monitoring module contains its own control and/or its own memory and/or its own connection means in order to increase the redundancy and consequently secure the highest possible reliability of a largest part of the system. It is, however, possible to omit this redundancy from the system and instead employ the system with a central control and/or a central memory and/or a central connection means.

According to an embodiment of the invention, the system includes at least two monitoring modules which are located in the immediate vicinity of a distribution panel of the electrical installation.

An example of an advantage caused by this is that the distance from the distribution panel to these elements is thus relatively short, and consequently an increase in reliability is e.g. achieved.

According to an embodiment of the invention, at least the detector and the regulator are located in the immediate vicinity of a distribution panel of the electrical installation.

Among other things, this provides the possible advantage that the signalling route of control signals between the different modules is relatively short. A result of this is e.g. that an external signal may be distributed in a simple manner to the different modules.

According to another aspect of the invention, the purposes of the invention can be fulfilled by a method for use of a system for monitoring and controlling at least one power conductor, said system being designed for use in connection with an electrical installation with at least one power conductor for distribution of power to a number of outputs, said outputs being designed for connecting one or more electrical appliances, and said system comprising
- a detector
- a regulator
- a control
- a memory
- a connection means
the method comprising the steps of
- detecting a magnetic field through the power conductor in order to generate an output signal as an indication of an instant power consumption and as an indication of an accumulated power consumption, the power conductor connecting only one or very few outputs to other parts of the electrical installation
- determining an accumulated power consumption as a function of time for one or more electrical appliances connected to the power conductor
- storing of at least one predefined reference value for the accumulated power consumption of one or more electrical appliances connected to the power conductor
- determining an instant power consumption of one or mere electrical appliances connected to the power conductor
- storing at least one predefined reference value for the instant power consumption of one ore more electrical appliances connected to the power conductor
- regulating the supply of power to the power conductor by means of the regulator as a response to a signal from the control, based on the comparison of the detected accumulated or instant power consumption of one or more electrical appliances connected to the power conductor, and the predefined reference values.

A signal which is received through the connection means may include one or more of the following signals: the magnetic field as measured and possibly at least partly processed by the detector, a user input in the form of activation of an electrical switch in a room, and/or specification of data from an external unit such as a PC which is capable of communicating with the connection means, a signal from a light sensor, a signal from a temperature sensor, a signal from a motion sensor, a signal to dampen, interrupt or connect the power supply to a specific conductor (by means of the regulator), a signal transmitted from another connection means, and/or a signal from a power supplier.

A signal which is sent through the connection means may include one or more of the following signals: a control signal for the regulator to disconnect, connect or dampen a power conductor, an alarm signal in case of a power conductor conducting substantially more power than expected with respect to the predefined accumulated power consumption of the connected electrical appiiance(s) (such as a freezer that is in need of defrosting), an alarm signal in case of power conductors not conducting power where conduction of power could be expected (such as a freezer which is broken), or an alarm signal in case of power conductors conducting power when they should not. (Such as light in a shed during the night, light in one or more places in a household during a vacation period or the like).

Finally, the signals that are transmitted from the control may be an alarm signal, possibly together with a signal to disconnect a power conductor, as a consequence of detection of one or more occurrences of instant power consumption by a power conductor, which is an indication of an electrical disturbance such as an arcing fault. An arcing fault may e.g. show in the power consumption as a transient. Alternatively it can be chosen to transmit this alarm signal when a number of transients in the power consumption exceed a predefined reference value of an addition of several occurrences of instant power consumption.

Finally, signals will be transmitted with an alarm in a predefined but variable extent in the case of parts of the installation being disconnected by one or more relays, e.g. because of such electrical disturbances. Furthermore, signals may be transmitted to the power supplier.

In further embodiments of the invention, the system may also be used to communication with a fire department or a security service.

Both the signals that are sent and received may be transmitted through wiring and/or through wireless transmission. Wiring may include one or more of the following known forms: separate conductors, the telephone network including the internet, power conductors in an electrical installation, the electrical power network, etc. Wireless transmission may include one or more of the following known forms of communication such as the mobile telephone network, RF signals, BluetoothÒ communication, etc.

The method may further comprise that interruption of the power supply takes place due to the determination, by means of the detector of the power conductor, of an accumulated power consumption which is equivalent to a value below a lowest predefined reference value for the accumulated power consumption.

In order to determine the lowest predefined reference value for the electrical appliance(s) which is/are connected to a power conductor, the particular appliances may e.g. be switched to stand-by mode. After this, it is possible to let the detector measure the power consumption. Alternatively, a value for stand-by consumption may be set for a given appliance connected to a given conductor. This value may be set through the connection means. 0-10% may possibly be added to this entry or to the measured value. Subsequently, it may be specified how long a consumption equivalent to stand-by consumption is tolerated.

Whether or not interruption should take place as a consequence of a substantial detection of a stand-by consumption during a given period of time, may as a further possibility be made dependent on the presence of signals from other associated units such as a motion sensor.

Since the power conductors, in which a power consumption is detected which substantially corresponds to or is immediately above stand-by power consumption during a given period of time, will be disconnected, disturbances may not at all arise during the period of time in which they are disconnected. This increases security during this period of time without the necessity of monitoring for transients in power consumption. At the same time, no unnecessary magnetic fields are created around the power conductors in the electrical installation during this period of time. Some studies show, and some consumers think that these magnetic fields constitute a form of "electrosmog". This electrosmog may influence people's well-being and at worst their health.

According to possible preferred embodiments, a detector and a regulator are installed for each power conductor. It is further preferred that only one or at least relatively few electrical appliances are connected to each power conductor with a detector. This will prevent a situation in which actual consumption of an appliance, which is being used, among several appliances connected to a power conductor, is interpreted as stand-by consumption of several appliances. However, these situations will mainly arise in cases where a relatively high number of appliances are connected to a power conductor, and/or where the stand-by consumption of each of the appliances is relatively high, and/or where an actual power consumption during use of one or more of the appliances is relatively low.

The method may further comprise that interruption of the power supply takes place due to the determination, by means of the detector of the power conductor, of an accumulated power consumption which is equivalent to a value above a highest predefined reference value for the accumulated power consumption.

In order to determine the highest predefined reference value for the electrical appliance(s) which is/are connected to a power conductor, the particular appliances may be switched to normal operating mode. After this, it is possible to let the detector measure the power consumption. Alternatively, a value for operating mode consumption may be set for a given appliance connected to a given conductor. This value may be set through the connection means. 0-10% may possibly be added to this entry or to the measured value. Subsequently, it may be specified how long a consumption equivalent to overconsumption is tolerated.

The method may further comprise that interruption of the power supply takes place due to the determination, by means of the detector of the power conductor, of an instant power consumption which is equivalent to a value above a highest predefined reference value for the instant power consumption.

The method may further comprise the following steps
- establishing a user profile for the electrical installation, said user profile comprising at least one of the following criteria: which power conductors may be disconnected, how long the power conductors may be disconnected, which time of the day the disconnection is desired, expected duration of the disconnection, cause for the disconnection to be desired, expected saving due to the disconnection.
- storage of the user profile
- interruption of the power supply to one or more power conductors according to the user profile based on an external control signal, e.g. sent by a power supplier.

The method may further comprise the following steps
- establishing a user profile for the electrical installation, said user profile comprising at least one of the following criteria: which power conductors may be dampened, how long the power conductors may be dampened; which time of day the damping is desired, expected duration of the disconnection, the cause for the disconnection to be desired, expected saving because of the disconnection.
- storage of the user profile
- damping of the power supply to one or more power conductors according to the user profile based on an external control signal, e.g. sent by a power supplier.

By user profile may be understood one or more of the following criteria: which power conductors may be disconnected or dampened, how long the power conductors may be disconnected or dampened, under which circumstances the power conductors may be disconnected or dampened. By circumstances may be understood: time of day, expected duration of the disconnection or damping, the cause for the disconnection or damping to be desired, including if there is a risk of disturbances in power supply from the power supplier, or if there is a desire of connection shifted in time of the power conductors after a total power supply failure, the expected saving due to the disconnection.

Thus, it is e.g. possible for the power supplier to offer different power supply products to different consumers according to a defined user profile. These products may e.g. include that all power conductors in a consumer's electrical installation except the freezer/refrigerator may be disconnected during a peak period like e.g. between 8 and 16 Monday to Friday. Another example may be that all power conductors in a household except the power to the refrigeration and/or freezer element may be connected later for this electrical installation than that of other consumers after a possible total supply failure. The described examples may also be combined. During a disconnection of most of an installation between 8 and 16 Monday to Friday for a household (or during weekends for offices that are not manned during weekends), security will be increased due to the fact that no problems may arise in electrical appliances or the installation, which are thus not connected during this period of time. This will increase security while minimising power consumption.

A power conductor which has been disconnected or dampened must be fully connected again. As described, the disconnection may e.g. be due to the determination of a power consumption which is substantially equal to a stand-by power consumption during a given period of time; due to a power consumption which is substantially higher than the usual power consumption during a given period of time; due to disturbances; due to the power supplier's disconnection of the power conductor. Damping would normally be due to the power supplier's damping of the power conductor.

The connection may take place after receipt of signals in the control which signify that a light sensor and/or a motion sensor is/are activated. The connection may also or alternatively to the above happen due to activation of one or more other regulators or switches in the installation, and/or after a predetermined amount of time. If the cause of the disconnection is a disturbance in the electrical installation, it is possible that the power conductor(s) which has/have been disconnected must be reconnected through manual intervention.

Changes to the configuration of the system according to the invention may take place by means of one or more of the following units connected to the (one or more) connection means: a PC, a Personal Digital Assistant, a mobile telephone or similar units with a user interface and software for displaying and/or changing the configuration. Finally, such units may alternatively be used to control or monitor the system from a given location, e.g. via SMS or e-mail.

In general the various aspects of the invention may be combined and coupled in any way possible within the scope of the invention.

### Brief description of the figures

FIG. 1 shows the location of monitoring modules in principle according to a possible embodiment of the invention in an electrical installation.
Among other things, FIG. 2 shows four detectors in a monitoring module in principle according to a possible embodiment of the invention for switching on/off electrical appliances and installations, and
FIG. 3 shows a detector in a monitoring module in principle according to a possible embodiment of the invention for damping and/or switching on/off connected electrical appliances.

### Detailed description of the figures

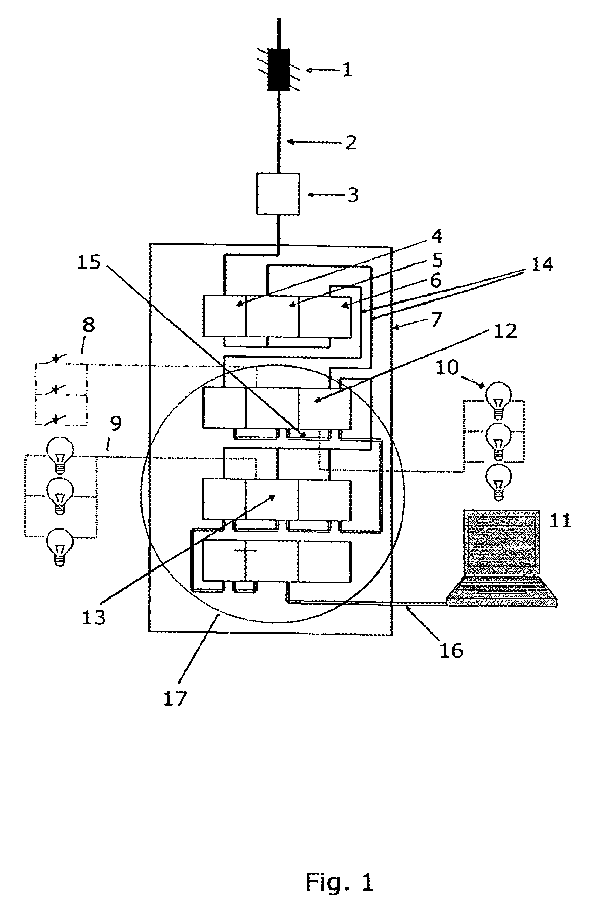

FIG. 1 shows the location of monitoring modules 12,13 in principle according to a possible embodiment of the invention in an electrical installation. The figure shows a service conductor fuse 1 located in a support of an overhead line or an electricity cabinet near a road, and a service conductor 2 leading to an electricity supply meter 3 of a household. The electricity supply meter may be associated with an IP address. From there the power is transported to a standard GFC interrupter 4 and on to the automatic switch 5 and the automatic switch 6. In this embodiment, the automatic switches 5, 6, the GFC interrupter 4 as well as the monitoring modules 12, 13 are located in a distribution board 7 (this distribution board may also be referred to as a group board or a main board). From the automatic switches 5, 6 the power is transported to the individual monitoring modules through current-carrying electric wires as shown by 14.

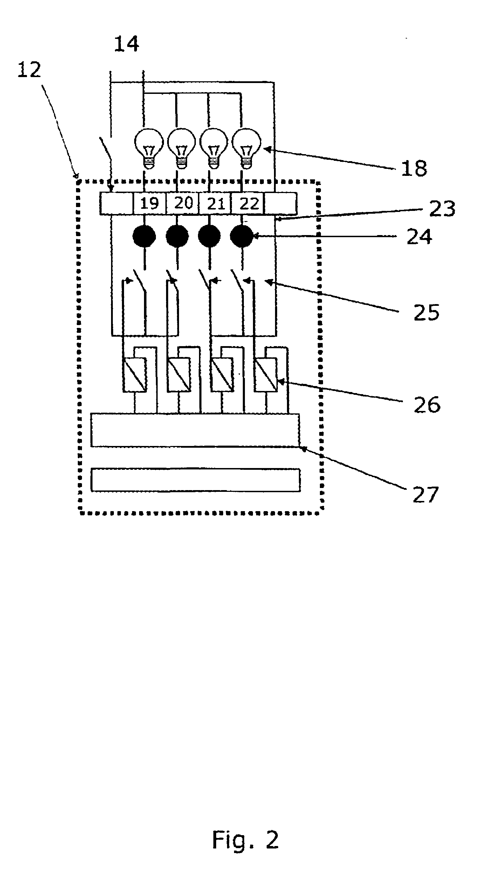

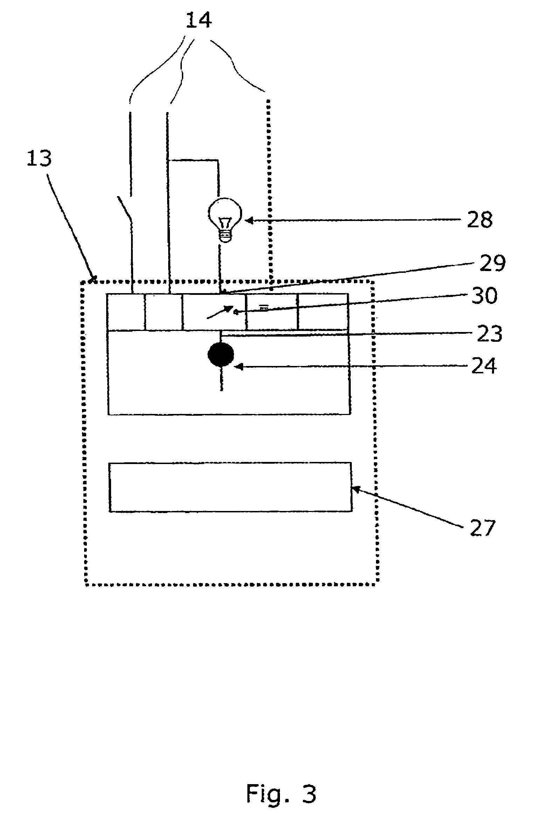

A first monitoring module 12 is a module for monitoring and controlling the power of an output, which in the shown example is connected to three lamps 10. A second monitoring module 13 is a module for monitoring and controlling the power of an output, which in the shown example is connected to three lamps 9. In addition to switching on/off the power of the three lamps 9, the second module 13 is also capable of damping the power supply to the three lamps 9. A more detailed description of the monitoring modules 12, 13 is found in the description of FIG. 2 and FIG. 3.

By means of push-buttons 8, the first monitoring module 12 can switch the lamps 10 on or off via a signalling route which comprises a power conductor 15. Lamps 10 are shown in the example, but it goes without saying all forms of electrical installations and appliances may be connected to the first monitoring module 12, such as a freezer. The example also shows lamps 9, but all forms of electrical installations and appliances, for which it is appropriate to dampen the power consumption, may be connected to the second monitoring module 13. In the shown embodiment, a PC is connected to the collection of modules 17 via a signalling route 16. This PC may also be connected via the internet. In an embodiment with fixed wiring, the signalling routes 15,16 may consist of a 4-conductor bus communication.

In further embodiments, the collection of modules 17 may, apart from the shown connected units 8,9,10,11, also be connected to units such as: a light sensor, a temperature sensor, a motion sensor, or a unit which is capable of receiving and transmitting a signal to dampen an appliance connected to the other monitoring and control module 13. As an example a gateway may also be connected, said gateway providing connection to a mobile telephone. Finally the system may be designed to communicate with e.g. a power supplier.

FIG. 2 shows four detectors 24 in a first monitoring module 12 in principle according to a possible embodiment of the invention for switching on/off the connected electrical appliances or installations. The figure shows supply of power to the module via power conductors 14. The figure also shows a number of power conductors 23 which lead to four outputs 19,20,21,22. A detector 24 is located for each of the four outputs in this embodiment. In this embodiment according to the invention, the detector is a Hall sensor. The detector 24 is shown as located above the power conductors 23, but the exact location of the detection means is decided based on the desired embodiment according to e.g. present conditions of space and magnetic fields. The exact location is also decided with respect to the operational characteristics of the chosen detector.

The modules are preferably provided in a size and with attachment means for mounting the modules on standard-sized mounting rails normally provided in the electrical distribution board. Such standard-sized modules may e.g. in Europe be provided according to DIN (Deutsche Industrie Norm).

Each output is connected to a lamp 18. The example shows a lamp 18, but it goes without saying that all forms of electrical appliances or installations may be connected to the monitoring module 12, such as e.g. a freezer at output 22, a refrigerator at output 21, a coffee maker at output 20 and a copying machine and/or a soda machine at output 20. In this embodiment, the number of outputs in the module is four, but the number of outputs may be chosen according to the desired embodiment. In this embodiment, each output is provided with a relay for disconnecting/connecting each output. In the shown embodiment the relay comprises a relay coil 26 and a relay switch 25. The relay may also constitute a regulator. This regulator may be an on/off relay and/or a triac control and/or a control by means of transistors. Triac and transistor control can switch a power conductor on/off, but may also be used for damping.

Each detector 24 detects the magnetic field around the individual power conductor 23 for the individual output. Processing of the magnetic field in the actual detector may vary according to the type and make of the detector. A signal from the detector is transmitted to a control 27 through a wiring (not shown). In this embodiment, the control 27 includes a micro processor (not shown) with matching storage means (not shown) and connection means (not shown). In this embodiment, the micro processor in the control 27 also processes the signal from the detector 24. Among other things, this processing includes amplification and filtration of the signal so that a signal is achieved which indicates an instant power consumption and thus possible disturbances in the power consumption as a function of time. The processing also includes comparison of a measured instant power consumption and a measured accumulated power consumption to previously measured values and/or predefined reference values.

The reference values comprise reference values for an accumulated power consumption, including the stand-by power consumption and an expected maximum power consumption at normal functioning of the appliance(s) or installation(s) which is/are connected to a given power conductor. The reference values also include values of instant power consumption in order to determine an acceptable level of electrical disturbance for the appliance(s) or installation(s) which is/are connected to a given power conductor (equivalent to a given output). The method or configuration as well as the reference values, based on which the comparison takes place, are stored in the memory (not shown).

Based on the comparison, the power supply may be interrupted and/or signals may be transmitted via the connection means. A user profile for the particular electrical installation is stored in a central memory or in each of the memories in the individual monitoring modules 12,13 (13 is shown in FIG. 1 and FIG. 3). This user profile describes which power conductors may be disconnected, for how long the power conductors may be disconnected, and under which circumstances the power conductors may be disconnected as a consequence of a given control signal from a power supplier. This control signal is received via the connection means (not shown). It is also via the connection means that the individual module and/or a central module is/are capable of receiving and transmitting signals from and to other modules and connected units.

A high instant power consumption, a transient, indicates a disturbance such as an arcing fault which arises in the electrical installation and/or in the connected appliances or installations. The disturbances may be due to beginning short circuits or bad electrical connections which are not detected in due time by a GFC interrupter or by automatic switches. By detecting electrical disturbances significantly earlier than the GFC interrupter or the automatic switches, it is e.g. possible to avoid the risk of fire caused by the disturbances.

An arcing fault may appear when two power conductors in the electrical installation become separated by a small air gap that allows current to pass through it. In most instances of arcing faults, the current flows intermittently, as if there is a switch that is turned alternately and irregularly "on" and "off'. Arcing faults may lead to the following threats and problems: 1) A fire hazard resulting from excessive heat that is liberated unexpectedly at an insufficiently protected arcing zone. 2) An arcing fault which develops into a major fault, damaging the electric appliance or machine in which it occurs, and leading to a final short circuit and current termination. 3) An arcing fault which leads to bursts of over currents and to irregular current supply, which accelerates the wear of the electric appliances involved.

A series arcing fault is not protected by fuses or circuit breakers that protect against dangerous over-currents by terminating the current flow in the event of a short-circuit or protected by an overload ground fault interrupters which terminates the current flow whenever there is a dangerous leakage of current from a "line" (phase) conductor to a "ground" conductor. This is e.g. due to the current being limited by a load resistance, and is consequently below a threshold value predefined as dangerous. A parallel arcing fault is also not completely protected by fuses or circuit breakers, since as long as an average current is below a predefined threshold value, the parallel arcing fault continues to constitute a fire hazard. Also, there is the potential for a short-circuit build-up, followed by current termination.

FIG. 3 shows a detector 24 in a monitoring module 13 in principle according to a possible embodiment of the invention for damping and/or switching on/off connected electrical appliances.

In the case of possible disturbances and/or in the case of a given power consumption which is detected by the detector (the Hall sensor) 24, the power connection via the power conductor 23 of the output 29 can be turned off or dampened. In this way, the lamp 28 is not provided with power, or the lamp 28 is dimmed. This may also happen as a result of a signal which is received from the power supplier or from another module. A regulator is used for turning on/off and possible also for damping. This regulator may be an on/off relay and/or triac or transistor control. In principle, the control 27 comprises the same means and functions according to the same principles as described for FIG. 2. However, in the shown embodiment it is possible to dampen the power supply to the output 29 by means of a damper 30 based on a damping signal received via the connection means which is comprised by the control 27. In the case of detection of disturbances of an output, the output will normally be interrupted and not merely dampened.

In special cases, the damper 30 may be used in combination with overall processing and control of the power supply from a power supplier. Based on a previous arrangement with the consumer, it is possible to dampen or turn off the power supply during periods of time with peak loads on other parts of the distribution network than the part of the distribution network to which the particular electrical installation is connected. This may minimise expenses to a possible expansion of the distribution network. This may also be applied in connection with faults on or damage to the distribution network, and where a connection shifted in time must take place in order to avoid overloading of the power supply. In this embodiment, the number of outputs in the module is one, but the number of outputs may be chosen according to the desired embodiment.

In a preferred embodiment, the control 27 is pre-programmed so that the power supplier, via a wired connection such as via the internet or via a wireless connection, e.g. via a PC, may regulate disconnection and connection of the electrical installation with respect to the particular part of the distribution network. The regulation of disconnection may e.g. take place during daytime in private households when the residents are not at home, but other consumers such as offices and factories are manned. The regulation of connection may e.g. take place in connection with a fault on or damage to the distribution network, and where some consumers such as hospitals, offices and companies need to be connected quicker than other consumers such as private households or electric heating in summer cottage areas.

## Claims

1. A system for monitoring and controlling at least one power conductor, said system being designed for use in connection with an electrical installation with at least one power conductor for distribution of power to at least one output designed for connecting one or more electrical appliances, said system comprising
- a detector (24) which is operationally located with respect to one power conductor connecting only one or very few outputs to other parts of the electrical installation, and where the detector is capable of detecting a magnetic field around the conductor, and where the detector is adapted to give an electric output signal as a response to a detected magnetic field of the power conductor,
- a regulator (25,26) for regulating the power of the power conductor, and where the regulator is at least adapted to respectively interrupt and connect the power of the power conductor as a response to a control signal from a control
- a control (27) for processing the output signal from the detector and for controlling the regulator (25,26) as a response to the output signal from the detector, and possibly also as a response to an external control signal
- a memory designed for containing reference values for at least one predefined instant power consumption and for at least one predefined accumulated power consumption as a function of time, and a connection means for transmitting and receiving signals from and to the control, and
- said system being adapted in such a manner that, based on the detected magnetic field, an indication of both an instant and an accumulated power consumption is achieved as a function of time to be compared to the predefined instant power consumption and the predefined accumulated power consumption.

2. A system according to claim 1, where at least two of the following elements comprised in the system are located in one monitoring module for monitoring and controlling at least one power conductor; one or more detectors, one or more regulators, the control, the memory as well as the connection means.

3. A system according to any of the claims 1 or 2, said system comprising at least two monitoring modules located in the immediate vicinity of a distribution panel of the electrical installation.

4. A system according to any of claims 1-3, where at least the detector and the regulator are located in the immediate vicinity of a distribution panel of the electrical installation.

5. A system according to claim 1, wherein the system is adapted to give an output signal from the detector and is adapted to control the regulator of a conductor associated with the regulator and/or is adapted to control one or more regulators of other conductor(s) in response to the output signal from the detector, wherein the output signal comprises changes in the instant power consumption due to electrical disturbances.

6. A system according to claim 2, wherein at least one monitoring module is also adapted to distribute electricity from an input power conductor to at least two power conductor outputs.

7. A method for use of a system for monitoring and controlling at least one power conductor, said system being designed for use in connection with an electrical installation with at least one power conductor for distribution of power to a number of outputs, said outputs being designed for connecting one or more electrical appliances, said system comprising
- a detector (24)
- a regulator (25,26)
- a control (27)
- a memory
- a connection means
the method comprising the steps of
- detecting a magnetic field around the power conductor in order to at least generate an output signal as an indication of instant power consumption and as an indication of accumulated power consumption, the power conductor connecting only one or very few outputs to other parts of the electrical installation,
- determining accumulated power consumption as a function of time for one or more electrical appliances connected to the power conductor
- storing of at least one predefined reference value for the accumulated power consumption of one or more electrical appliances connected to the power conductor
- determining an instant power consumption of one or mere electrical appliances connected to the power conductor
- storing at least one predefined reference value for the instant power consumption of one ore more electrical appliances connected to the power conductor
- regulating the supply of power to the power conductor by means of the regulator as a response to a signal from the control based on the comparition of the detected accumulated or instant power consumption of one or more electrical appliances connected to the power conductor, and the predefined reference values.

8. A method according to claim 7, where the interruption of the power supply takes place because of the determination, by means of the detector of the power conductor, of an accumulated power consumption which is equivalent to a value below a lowest predefined reference value for the accumulated power consumption.

9. A method according to any of claims 7 or 8, where the interruption of the power supply takes place as a result of the determination, by means of the detector of the power conductor, of an accumulated power consumption which is equivalent to a value above a highest predefined reference value for the accumulated power consumption.

10. A method according to any of claims 7-9, where the interruption of the power supply takes place as a result of the determination, by means of the detector of the power conductor, of an instant power consumption which is equivalent to a value above the predefined reference value for the instant power consumption.

11. A method according to any of claims 7-10, said method comprising the following steps
- establishing a user profile for the electrical installation, said user profile comprising at least one of the following criteria: which power conductors may be disconnected; how long the power conductors may be disconnected, which time of the day the disconnection is desired, expected duration of the disconnection, cause for the disconnection to be desired, expected saving due to the disconnection.
- storage of the user profile
- disconnection of the power supply to one or more power conductors according to the user profile based on an external control signal, e.g. sent by a power supplier.

12. A method according to any of claims 7-10, said method comprising the following steps
- establishing a user profile for the electrical installation, said user profile comprising at least one of the following criteria: which power conductors may be dampened, how long the power conductors may be dampened, which time of day the damping is desired, expected duration of the disconnection; the cause for the disconnection to be desired, expected saving because of the disconnection.
- storage of the user profile
- damping of the power supply to one or more power conductors according to the user profile based on an external control signal, e.g. sent by a power supplier.

## Patentansprüche

1. System zur Überwachung und Steuerung wenigstens einer Stromleitung, wobei das System dafür eingerichtet ist, in Verbindung mit einer elektrischen Anlage verwendet zu werden, die wenigstens eine Stromleitung zur Stromversorgung wenigstens eines Ausgangs hat, der dafür eingerichtet ist, ein oder mehrere elektrische Geräte anzuschließen, wobei das System Folgendes umfasst:
- einen Detektor (24), der in Bezug auf eine Stromleitung, die nur einen oder sehr wenige Ausgänge mit anderen Teilen der elektrischen Anlage verbindet, funktionsfähig angeordnet ist, wobei der Detektor dazu geeignet ist, ein Magnetfeld um die Leitung herum zu detektieren, und wobei der Detektor dafür eingerichtet ist, als Reaktion auf ein detektiertes Magnetfeld der Stromleitung ein elektrisches Ausgangssignal bereitzustellen,
- einen Regler (25, 26) zur Leistungsregelung der Stromleitung, wobei der Regler wenigstens dafür eingerichtet ist, als Reaktion auf ein Steuersignal von einer Steuerung, den Strom auf der Stromleitung zu unterbrechen bzw. einzuschalten,
- eine Steuerung (27) zur Verarbeitung des Detektorausgangssignals und zur Steuerung des Reglers (25, 26) in Reaktion auf das Detektorausgangssignal, sowie gegebenenfalls auch in Reaktion auf ein externes Steuersignal,
- einen Speicher, der dafür eingerichtet ist, Bezugswerte für wenigstens einen vorgegebenen momentanen Stromverbrauch und für wenigstens einen vorgegebenen Gesamtstromverbrauch in Abhängigkeit von der Zeit zu enthalten, und ein Verbindungsmittel zum Übertragen und Empfangen von Signalen von der und an die Steuerung, und wobei
- das System auf eine solche Art eingerichtet ist, dass, basierend auf dem detektierten Magnetfeld, eine Angabe für sowohl einen momentanen wie auch einen Gesamtstromverbrauch in Abhängigkeit von der Zeit erhalten wird und diese mit dem vorgegebenen momentanen Stromverbrauch und dem vorgegebenen Gesamtstromverbrauch verglichen werden.

2. System nach Anspruch 1, wobei wenigstens zwei der folgenden im System enthaltenen Elemente in einem Überwachungsmodul zur Überwachung und Steuerung von wenigstens einer Stromleitung angeordnet sind: ein oder mehrere Detektoren, ein oder mehrere Regler, die Steuerung, der Speicher sowie das Verbindungsmittel.

3. System nach einem der Ansprüche 1 oder 2, wobei das System wenigstens zwei Überwachungsmodule umfasst, die in unmittelbarer Nähe zu einem Verteilerkasten der elektrischen Anlage angeordnet sind.

4. System nach einem der Ansprüche 1 bis 3, wobei wenigstens der Detektor und der Regler in unmittelbarer Nähe zu einem Verteilerkasten der elektrischen Anlage angeordnet sind.

5. System nach Anspruch 1, wobei das System dafür eingerichtet ist, ein Ausgangssignal vom Detektor bereitzustellen, und dafür eingerichtet ist, den Regler einer dem Regler zugeordneten Leitung zu steuern, und/oder dafür eingerichtet ist, einen oder mehrere Regler einer oder mehrerer anderer Leitungen zu steuern, und dies in Reaktion auf das Ausgangssignal vom Detektor, wobei das Ausgangssignal Veränderungen des momentanen Stromverbrauchs umfasst, die durch elektrische Störungen verursacht sind.

6. System nach Anspruch 2, wobei wenigstens ein Überwachungsmodul auch dafür eingerichtet ist, Strom von einer Eingangsstromleitung auf wenigstens zwei Ausgangsstromleitungen zu verteilen.

7. Verfahren für den Einsatz eines Systems zur Überwachung und Steuerung wenigstens einer Stromleitung, wobei das System dafür eingerichtet ist, in Verbindung mit einer elektrischen Anlage verwendet zu werden, die wenigstens eine Stromleitung zur Stromversorgung einer Anzahl von Ausgängen hat, wobei die Ausgänge dafür eingerichtet sind, ein oder mehrere elektrische Geräte anzuschließen, wobei das System Folgendes umfasst:
- einen Detektor (24)
- einen Regler (25, 26)
- eine Steuerung (27)
- einen Speicher
- ein Verbindungsmittel
wobei das Verfahren die folgenden Schritte umfasst:
- Detektieren eines Magnetfelds um die Stromleitung herum, um wenigstens hierdurch ein Ausgangssignal zu erzeugen, das eine Angabe für den momentanen Stromverbrauch und eine Angabe für den Gesamtstromverbrauch darstellt, wobei die Stromleitung nur einen oder sehr wenige Ausgänge mit anderen Teilen der elektrischen Anlage verbindet,
- Bestimmen des Gesamtstromverbrauchs in Abhängigkeit von der Zeit für ein oder mehrere elektrische Geräte, die an die Stromleitung angeschlossen sind,
- Speichern wenigstens eines vorgegebenen Bezugswertes für den Gesamtstromverbrauch eines oder mehrerer elektrischer Geräte, die an die Stromleitung angeschlossen sind,
- Bestimmen eines momentanen Stromverbrauchs für ein oder mehrere elektrische Geräte, die an die Stromleitung angeschlossen sind,
- Speichern wenigstens eines vorgegebenen Bezugswertes für den momentanen Stromverbrauch eines oder mehrerer elektrischer Geräte, die an die Stromleitung angeschlossen sind,
- Regeln der Stromzufuhr für den Stromleiter mittels des Reglers in Reaktion auf ein Signal von der Steuerung, das auf dem Vergleich des detektierten Gesamt- oder momentanen Stromverbrauchs eines oder mehrerer elektrischer Geräte, die an die Stromleitung angeschlossen sind, mit den vorgegebenen Bezugswerten basiert.

8. Verfahren nach Anspruch 7, wobei die Unterbrechung der Stromversorgung aufgrund der Feststellung durch den Detektor der Stromleitung eintritt, dass ein Gesamtstromverbrauch gleich einem Wert ist, der kleiner als ein niedrigster vorgegebener Bezugswert für den Gesamtstromverbrauch ist.

9. Verfahren nach einem der Ansprüche 7 oder 8, wobei die Unterbrechung der Stromversorgung als eine Reaktion auf die Feststellung durch den Detektor der Stromleitung eintritt, dass ein Gesamtstromverbrauch gleich einem Wert ist, der größer als ein höchster vorgegebener Bezugswert für den Gesamtstromverbrauch ist.

10. Verfahren nach einem der Ansprüche 7 bis 9, wobei die Unterbrechung der Stromversorgung als eine Reaktion auf die Feststellung durch den Detektor der Stromleitung eintritt, dass ein momentaner Stromverbrauch gleich einem Wert ist, der größer als der vorgegebene Bezugswert für den momentanen Stromverbrauch ist.

11. Verfahren nach einem der Ansprüche 7 bis 10, wobei das Verfahren die folgenden Schritte umfasst:
- Erstellen eines Benutzerprofils für die elektrische Anlage, wobei das Benutzerprofil wenigstens eines der folgenden Kriterien umfasst: welche Stromleitungen getrennt werden können, wie lange die Stromleitungen getrennt werden können, zu welcher Tageszeit die Trennung erwünscht ist, die zu erwartende Dauer der Trennung, der Grund, warum die Trennung erwünscht ist, die erwartete Einsparung durch die Trennung,
- Speichern des Benutzerprofils,
- Trennen der Stromversorgung von einer oder mehreren Stromleitungen entsprechend dem Benutzerprofil und basierend auf einem externen Steuersignal, das beispielsweise von einem Stromversorger gesendet wird.

12. Verfahren nach einem der Ansprüche 7 bis 10, wobei das Verfahren die folgenden Schritte umfasst:
- Erstellen eines Benutzerprofils für die elektrische Anlage, wobei das Benutzerprofil wenigstens eines der folgenden Kriterien umfasst: welche Stromleitungen gedrosselt werden können, wie lange die Stromleitungen gedrosselt werden können, zu welcher Tageszeit die Drosselung erwünscht ist, die zu erwartende Dauer der Trennung, der Grund, warum die Trennung erwünscht ist, die erwartete Einsparung durch die Trennung,
- Speichern des Benutzerprofils,
- Drosseln der Stromversorgung von einer oder mehreren Stromleitungen entsprechend dem Benutzerprofil und basierend auf einem externen Steuersignal, das beispielsweise von einem Stromversorger gesendet wird.

## Revendications

1. Système pour surveiller et contrôler au moins un conducteur de puissance, ledit système étant conçu pour être utilisé en liaison avec une installation électrique avec au moins un conducteur de puissance pour une distribution de puissance à au moins une sortie conçue pour raccorder un ou plusieurs appareils électriques, ledit système comprenant :
- un détecteur (24) qui est opérationnellement positionné par rapport à un conducteur de puissance raccordant seulement un ou très peu de sorties à d'autres parties de l'installation électrique, et où le détecteur est capable de détecter un champ magnétique autour du conducteur, et où le détecteur est adapté pour donner un signal de sortie électrique en réponse à un champ magnétique détecté du conducteur de puissance,
- un régulateur (25, 26) pour réguler la puissance du conducteur de puissance, et où le régulateur est au moins adapté pour respectivement interrompre et raccorder la puissance du conducteur de puissance en réponse à un signal de commande d'un contrôleur
- un contrôleur (27) pour traiter le signal de sortie du détecteur et pour commander le régulateur (25, 26) en réponse au signal de sortie du détecteur, et éventuellement aussi en réponse à un signal de commande externe
- une mémoire conçue pour contenir des valeurs de référence d'au moins une consommation de puissance instantanée prédéfinie et d'au moins une consommation de puissance accumulée prédéfinie en fonction du temps, et un moyen de connexion pour émettre et recevoir des signaux de et vers le contrôleur, et
- ledit système étant adapté de manière à ce que, sur la base du champ magnétique détecté, une indication à la fois d'un instant et d'une consommation de puissance accumulée est obtenue en fonction du temps à comparer à la consommation de puissance instantanée prédéfinie et à la consommation de puissance accumulée prédéfinie.

2. Système selon la revendication 1, où au moins deux des éléments suivants compris dans le système sont situés dans un module de surveillance pour surveiller et commander au moins un conducteur de puissance ; un ou plusieurs détecteurs, un ou plusieurs régulateurs, le contrôleur, la mémoire ainsi que le moyen de connexion.

3. Système selon l'une quelconque des revendications 1 ou 2, ledit système comprenant au moins deux modules de surveillance situés au voisinage immédiat d'un panneau de distribution de l'installation électrique.

4. Système selon l'une quelconque des revendications 1 à 3, dans lequel au moins le détecteur et le régulateur sont situés au voisinage immédiat d'un panneau de distribution de l'installation électrique.

5. Système selon la revendication 1, dans lequel le système est adapté pour donner un signal de sortie à partir du détecteur et est adapté pour commander le régulateur d'un conducteur associé au régulateur et/ou est adapté pour commander un ou plusieurs régulateurs d'autres conducteurs en réponse au signal de sortie du détecteur, dans lequel le signal de sortie comprend des variations dans la consommation de puissance instantanée dues à des perturbations électriques.

6. Système selon la revendication 2, dans lequel au moins un module de surveillance est aussi adapté pour distribuer de l'électricité à partir d'un conducteur de puissance d'entrée à au moins deux sorties de conducteur de puissance.

7. Procédé destiné à être utilisé dans un système pour surveiller et contrôler au moins un conducteur de puissance, ledit système étant conçu pour être utilisé en liaison avec une installation électrique avec au moins un conducteur de puissance pour la distribution de puissance à un nombre de sorties, lesdites sorties étant conçues pour raccorder un ou plusieurs appareils électriques, ledit système comprenant :
- un détecteur (24)
- un régulateur (25, 26)
- un contrôleur (27)
- une mémoire
- un moyen de connexion
le procédé comprenant les étapes de :
- détection d'un champ magnétique autour du conducteur de puissance afin au moins de générer un signal de sortie comme une indication de consommation de puissance instantanée et comme une indication de consommation de puissance accumulée, le conducteur de puissance raccordant seulement un ou très peu de sorties aux autres parties de l'installation électrique,
- détermination de la consommation de puissance accumulée en fonction du temps pour un ou plusieurs appareils électriques raccordés au conducteur de puissance,
- stockage d'au moins une valeur de référence prédéfinie pour la consommation de puissance accumulée d'un ou plusieurs appareils électriques raccordés au conducteur de puissance
- détermination d'une consommation de puissance instantanée d'un ou plusieurs appareils électriques raccordés au conducteur de puissance
- stockage d'au moins une valeur de référence prédéfinie pour la consommation de puissance instantanée d'un ou plusieurs appareils électriques raccordés au conducteur de puissance
- régulation de la fourniture de puissance au conducteur de puissance au moyen du régulateur en réponse à un signal du contrôleur basé sur la comparaison de la consommation de puissance accumulée ou instantanée détectée d'un ou de plusieurs appareils électriques raccordés au conducteur de puissance, et les valeurs de référence prédéfinies.

8. Procédé selon la revendication 7, où l'interruption de la fourniture de puissance a lieu à cause de la détermination, au moyen du détecteur du conducteur de puissance, d'une consommation de puissance accumulée qui est équivalente à une valeur en dessous d'une valeur de référence prédéfinie la plus basse pour la consommation de puissance accumulée.

9. Procédé selon l'une quelconque des revendications 7 ou 8, où l'interruption de la fourniture de puissance résulte de la détermination, au moyen du détecteur du conducteur de puissance, d'une consommation de puissance accumulée qui est équivalente à une valeur au-dessus d'une valeur de référence prédéfinie la plus élevée pour la consommation de puissance accumulée.

10. Procédé selon l'une quelconque des revendications 7 à 9, où l'interruption de la fourniture de puissance résulte de la détermination, au moyen du détecteur du conducteur de puissance, d'une consommation de puissance instantanée qui est équivalente à une valeur au-dessus d'une valeur de référence prédéfinie pour la consommation de puissance instantanée.

11. Procédé selon l'une quelconque des revendications 7 à 10, ledit procédé comprenant les étapes suivantes
- établissement d'un profil d'utilisateur pour l'installation électrique, ledit profil d'utilisateur comprenant au moins un des critères suivants : quels conducteurs de puissance peuvent être déconnectés ; combien de temps les conducteurs de puissance peuvent être déconnectés, quel moment de la journée la déconnexion est voulue, la durée attendue de la déconnexion, la cause à vouloir pour la déconnexion, l'économie attendue due à la déconnexion
- stockage du profil d'utilisateur
- déconnexion de la fourniture de puissance à un ou plusieurs conducteurs de puissance selon le profil d'utilisateur sur la base d'un signal de commande externe, par exemple envoyé par un fournisseur d'énergie.

12. Procédé selon l'une quelconque des revendications 7 à 10, ledit procédé comprenant les étapes suivantes :
- établissement d'un profil d'utilisateur pour l'installation électrique, ledit profil d'utilisateur comprenant au moins un des critères suivants : quels conducteurs de puissance peuvent être délestés, combien de temps les conducteurs de puissance peuvent être délestés, quel moment de la journée le délestage est voulu, la durée attendue de déconnexion ; la cause à vouloir pour la déconnexion, l'économie attendue à cause de la déconnexion,
- stockage du profil d'utilisateur
- délestage de la fourniture de puissance à un ou plusieurs conducteurs de puissance selon le profil d'utilisateur sur la base d'un signal de commande externe, par exemple envoyé par un fournisseur d'énergie.
